# EUROPÄISCHE PATENTSCHRIFT

(11) **EP 1 082 040 B1**
(45) Veröffentlichungstag und Bekanntmachung des Hinweises auf die Patenterteilung: **29.10.2003**
(21) Anmeldenummer: 00922464.3
(22) Anmeldetag: 30.03.2000
(51) Int. Cl.: A47F 10/04

(54) **EINRICHTUNG BESTEHEND AUS WENIGSTENS ZWEI TRANSPORTWAGEN UND AUS EINER SAMMELSTATION**
SYSTEM CONSISTING OF AT LEAST TWO TRANSPORT CARTS AND A COLLECTING STATION
INSTALLATION CONSTITUEE D'AU MOINS DEUX CHARIOTS DE TRANSPORT ET D'UN POSTE DE GROUPAGE

(30) Priorität: 03.04.1999 DE 19915316
(43) Veröffentlichungstag der Anmeldung: 14.03.2001
(73) Patentinhaber: WANZL METALLWARENFABRIK GMBH, D-89336 Leipheim (DE)
(72) Erfinder: EBERLEIN, Herbert, D-89347 Bubesheim (DE); ECKERT, Rainer, D-73230 Kirchheim Teck (DE); HÄMMERLE, Jürgen, D-89312 Günzburg (DE)
(86) Internationale Anmeldenummer: DE0000994
(87) Internationale Veröffentlichungsnummer: WO00059348

(56) Entgegenhaltungen:
- CH-A- 652 292
- US-A- 4 635 782
- US-A- 5 361 871
- US-A- 5 526 916

## Beschreibung

Die Erfindung betrifft eine Einrichtung bestehend aus wenigstens zwei Transportwagen und aus einer zur Aufnahme der Transportwagen bestimmten Sammelstation, wobei die Transportwagen eine von Hand betätigbare Rangiervorrichtung aufweisen und so gestaltet sind, dass sie sich mit gleichen Transportwagen platzsparend ineinanderschieben lassen und wobei die Sammelstation Führungen aufweist, in welchen die Transportwagen in wenigstens einer Reihe ausgerichtet abstellbar und der Reihe wieder entnehmbar sind.

Eine Einrichtung dieser Art ist beispielweise in der deutschen Offenlegungsschrift 29 29 369.4 beschrieben.

Es sind in der Vergangenheit Vorschläge gemacht worden, Transportwagen mit einer Stromquelle auszustatten. Dadurch lassen sich Transportwagen über einen Elektroantrieb antreiben und im Schritttempo fahren. Eine Stromquelle an Transportwagen lässt sich auch dazu benutzen, Informationseinrichtungen, z.B. ein Display, mit Strom zu versorgen. Da die Stromquelle üblicherweise durch wenigstens eine Batterie gebildet ist, muss diese hin und wieder aufgeladen werden.

In der US 5,361,871 ist inzwischen eine Einrichtung beschrieben, durch die es möglich ist, als Einkaufswagen gestaltete Transportwagen in zeitlichen Abständen mit elektrischer Energie zu versorgen. Diese Einkaufswagen sind jeweils mit einer ansteuerbaren, elektronischen Informationseinrichtung ausgestattet, die auf diese Energie angewiesen sind. Als primäre Energiequelle dient dabei eine Batterie, die sich an jedem Einkaufswagen befindet. Um die Batterien der Einkaufswagen aufladen zu können, ist die Einrichtung mit Bodenschienen ausgestattet, die nicht nur zur Führung der Transportwagen bestimmt sind, sondern auch elektrisch leitende Kontaktstreifen aufweisen, mit denen wiederum Kontaktnehmer in Berührung sind, die sich an den Einkaufswagen befinden. Jeder mit einer Batterie elektrisch verbundene Kontaktnehmer ist dabei an einer Längsseite des Fahrgestelles der Einkaufswagen angeordnet und befindet sich im vorne am Einkaufswagen gelegenen Stapeltotraum. In einem Ausführungsbeispiel (Fig. 9) der US 5,361,871 sind zwei in der Einrichtung abgestellte und ineinandergeschobene Einkaufswagen dargestellt Das Ausführungsbeispiel lässt offen, ob es aufgrund der gezeigten Bauweise der Einkaufswagen überhaupt möglich ist, zwei derart gestaltete Einkaufswagen in der geschilderten Weise platzsparend abzustellen. Selbst wenn dies möglich sein sollte, so stören beim platzsparenden Ineinanderschieben mehrerer Einkaufswagen erfahrungsgemäß trotzdem alle zusätzlichen Teile oder Bauteile, die sich zusammen mit den vorderen Fahrrollen im vorne gelegenen Stapeltotraum befinden. In der Regel behindern solche Teile, zu denen zweifelsohne die erwähnten Kontaktnehmer gehören, die vorderen Fahrrollen beim Durchschwenken zumindest dann, wenn diese als Lenkrollen ausgebildet sind und wenn versucht wird, einen Stapel ineinandergeschobener Einkaufswagen zu bewegen oder mit diesem eine Kurve zu fahren.

Es ist Aufgabe der Erfindung, eine Einrichtung der hier vorliegenden Art so weiterzuentwickeln, dass das Übertragen von elektrischer Energie auf die Transportwagen auf einfache und zweckmäßige Weise so erfolgen kann, dass die oben genannten Nachteile und Befürchtungen erst gar nicht auftreten können.

Die Lösung der Aufgabe besteht darin, dass jede Empfangsvorrichtung innerhalb des im hinteren Bereich eines jeden Transportwagens gelegenen Stapeltotraumes vorgesehen und die zum Übertragen von Energie bestimmte Anordnung neben den abgestellten Transportwagen angeordnet ist.

Die Erfindung nutzt in günstiger Weise den Umstand, dass die in der Sammelstation befindlichen Transportwagen durch die Führungen exakt in einer Reihe ausgerichtet sind. So kann die zum Übertragen der Energie bestimmte Anordnung parallel zu den Führungen angeordnet und dadurch eine große Maßgenauigkeit erzielt werden, um die Energieübertragung beispielsweise auf induktivem Wege oder durch Schleifkontakte zuverlässig durchführen zu können.
Der wesentliche Vorteil indes besteht darin, dass die Empfangsvorrichtung eines jeden Transportwagens im hinten gelegenen Stapeltotraum untergebracht ist. Dieser Vorteil wird beim Betrachten der nachfolgenden Zeichnung Fig. 3 ersichtlich. Während sich bei der Einrichtung gemäß der US 5,361,871 die als Empfangsvorrichtung dienenden Kontaktgeber in abgestelltem Zustand mehrerer Einkaufswagen, mit Ausnahme des zuvordersten Wagens, immer vom Fahrgestell des nächstfolgenden Einkaufswagens umgrenzt oder eingeschlossen sind, liegen die Empfangsvorrichtungen bei der nunmehr vorgeschlagenen Lösung frei. Die zum Übertragen der elektrischen Energie bestimmte Anordnung kann somit in äußerst zweckmäßiger Weise neben den abgestellten Transportwagen angeordnet werden, was bei der Einrichtung entsprechend der US 5,361,871 nicht möglich ist. Deshalb müssen bei dieser Einrichtung die stromführenden Teile an den Bodenschienen angeordnet sein.

Beim nachfolgend beschriebenen Ausführungsbeispiel ist die Empfangsvorrichtung für die zu übertragende Energie im Bereich des Stapeltotraumes der Transportwagen immer am Transportwagen an gleicher Stelle angeordnet. Dadurch lassen sich an der zum Übertragen der Energie bestimmten Anordnung in regelmäßigen Abständen Erregerspulen anbringen, die induktiv auf Empfängerspulen einwirken, welche die Empfangsvorrichtungen an den Transportwagen bilden. Die Empfangsvorrichtungen sind dabei in einem der beiden hinteren seitlichen Bereiche der Transportwagen angeordnet.

Die Einrichtung steht bevorzugt immer unter Strom, so dass ein automatisches Aufladen der Stromquelle der Transportwagen immer dann erfolgt, wenn diese sich in der Sammelstation befinden.

Die Erfindung wird anhand eines Ausführungsbeispieles näher erläutert. Es zeigt
Fig. 1 in einer Draufsicht eine Sammelstation mit zwei Reihen abgestellter Transportwagen;
Fig. 2 einen Transportwagen mit Blick auf die Rangiervorrichtung, sowie
Fig. 3 eine Reihe ineinandergeschobener Transportwagen.

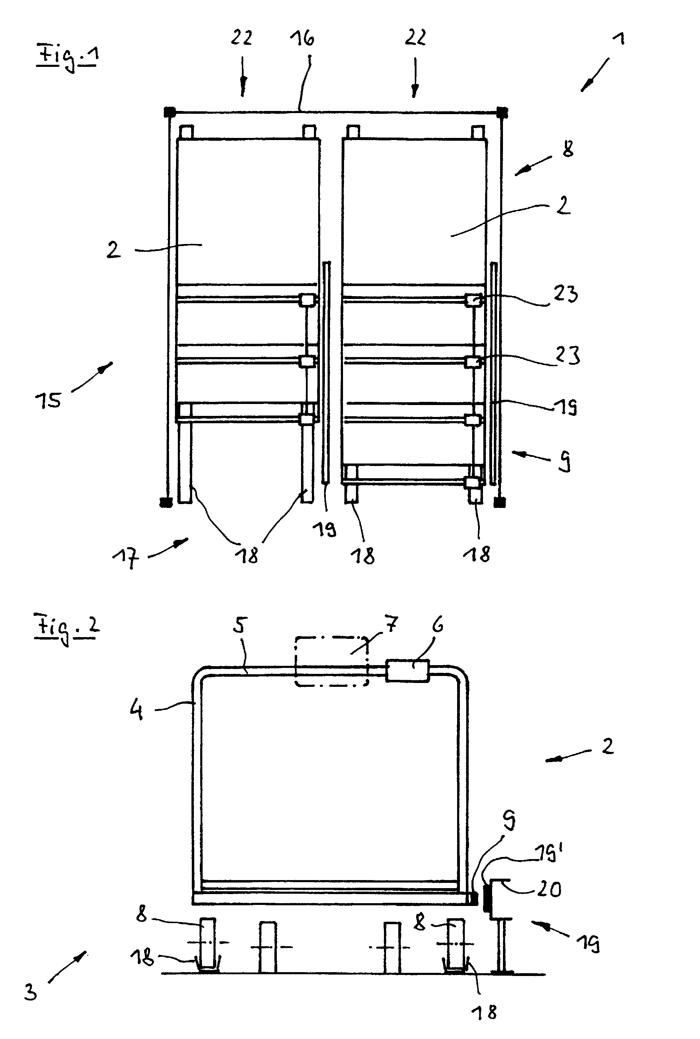

Fig. 1 zeigt in einer Draufsicht und in schematischer Weise eine Einrichtung 1 bestehend aus wenigstens zwei Transportwagen 2 und aus einer Sammelstation 15, in der Transportwagen 2 in zwei Reihen 22 abgestellt sind. Die Sammelstation 15 ist in bekannter Weise ein gehäuseartiger Aufbau mit einem Dach, das von drei Wänden getragen ist. In bevorzugter Weise sind die Transportwagen 2 mit Hilfe von bekannten Pfandschlössern 23 aneinandergekoppelt abgestellt. Durch Entrichtung eines Pfandes läßt sich ein Transportwagen 2 einer Reihe 22 entnehmen. Beim Zurückbringen des Transportwagens 2 wird dieser an die Reihe 22 angekoppelt und der Benutzer des Transportwagens 2 erhält sein Pfand zurück. Am Fußboden der Sammelstation 15 sind Führungen 18 angeordnet, die vom offenen Eingang 17 aus zur Rückwand 16 der Sammelstation 15 streben. Die Transportwagen 2 sind in bekannter Weise so gestaltet, daß diese sich mit gleichen Transportwagen 2 platzsparend ineinanderschieben lassen. Die Transportwagen 2 sind bevorzugt mit ihren Rädern oder Rollen 8 in den Führungen 18 geführt. Dadurch sind die Transportwagen 2 exakt in einer Richtung ausgerichtet. Pro Reihe 22 Transportwagen 2 ist je eine Anordnung 19 vorgesehen, die zum Übertragen von Energie bestimmt ist, wobei sich jede Anordnung 19 längs zu einer Reihe 22 parallel zu den Führungen 18 angeordnet erstreckt. An jedem Transportwagen 2 ist eine Empfangsvorrichtung 9 vorgesehen, die zur Aufnahme der von der Anordnung 19 zu übertragenden Energie bestimmt ist, siehe Fig. 2.

Fig. 2 zeigt einen Transportwagen 2 mit Blick auf dessen Rückseite 3, an welcher eine Rangiervorrichtung 4 angeordnet ist. Die Rangiervorrichtung 4 umfaßt eine Schiebe- und/oder Lenkeinrichtung 5. Besitzt der Transportwagen 2 eine elektromotorische Antriebseinheit, umfaßt die Rangiervorrichtung 4 auch noch Ansteuerelemente 6, mit deren Hilfe sich die elektromotorische Antriebseinheit ansteuern und beeinflussen läßt. Ebenso kann an oder im Bereich der Rangiervorrichtung 4 eine elektronische Informationseinrichtung 7, beispielsweise ein stromgespeistes Display vorgesehen sein. Der Transportwagen 2 ist üblicherweise so gestaltet, daß mit ihm Ware aus SB-Geschäften oder auch Gepäck von Reisenden transportiert werden können. Die Zeichnung zeigt, daß sich die beiden hinteren Räder oder Rollen 8 des Transportwagens 2 in Führungen 18 befinden. An der rechten Seile des Fahrgestelles des Transportwagens 2 ist eine Empfangsvorrichtung 9 angeordnet. Von der Empfangsvorrichtung 9 führt ein stromleitendes Kabel zu einer nicht dargestellten, bevorzugt als Batterie gestalteten, am Transportwagen 2 befindlichen Stromquelle. Im Beispiel erfolgt die Energieübertragung auf induktivem Wege. Zu diesem Zweck sind an der Anordnung 19 in regelmäßigen Abständen elektrisch wirkende Erregerspulen 19' angeordnet, die ein durch Wechselstrom pulsierendes Magnetfeld aufbauen, das auf die Empfangsvorrichtung 9 einwirkt, die als Empfängerspule 9' gestaltet ist und die nunmehr als elektrischen Strom vorliegende Energie an die am Transportwagen 2 befindliche Stromquelle weiterleitet. Die Anordnung 19 weist im Beispiel eine längs verlaufende, horizontal angeordnete, von Pfosten getragene Schiene 20 auf, an welcher die Erregerspulen 19' angeordnet sind.

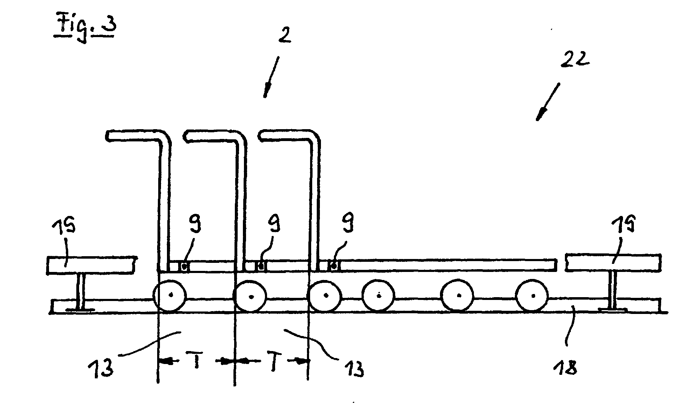

In einer Seitenansicht zeigt Fig. 3 eine Reihe 22 ineinandergeschobener Transportwagen 2, die in den Führungen 18 geführt sind. Die Anordnung 19 ist unterbrochen dargestellt. Die an den Transportwagen 2 befindlichen Empfangsvorrichtungen 9 sind durch je einen Punkt schematisch dargestellt. Durch die Maße T sind die Stapeltoträume 13 der einzelnen Transportwagen 2 dargestellt. Jede Empfangsvorrichtung 9 befindet sich innerhalb eines Stapeltotraumes 13. Sie wird somit nicht durch einen Teil des jeweils vorausbefindlichen Transportwagens 2 abgedeckt. Die Energie kann deshalb jederzeit von der Anordnung 19 auf die Empfangsvorrichtungen 9 übertragen werden. Die an der Anordnung 19 befindlichen Erregerspulen 19' sind den Abständen T entsprechend angeordnet.

## Patentansprüche

1. Einrichtung (1) bestehend aus wenigstens zwei Transportwagen (2) und aus einer zur Aufnahme der Transportwagen (2) bestimmten Sammelstation (15), wobei die Transportwagen (2) eine von Hand betätigbare Rangiervorrichtung aufweisen und so gestaltet sind, dass sie sich mit gleichen Transportwagen (2) platzsparend ineinanderschieben lassen, wobei ferner die Sammelstation (15) Führungen (18) aufweist, durch welche die Transportwagen (2) in der Sammelstation in wenigstens einer Reihe (22) ausgerichtet abstellbar und der Reihe (22) wieder entnehmbar sind und wobei die Sammelstation wenigstens eine längs sich erstreckende, zum Übertragen von Energie bestimmte Anordnung (19) aufweist, die parallel zu den Führungen (18) verläuft und seitlich an jedem Transportwagen (2) eine Empfangsvorrichtung (9) zur Aufnahme der zu übertragenden Energie angeordnet ist, **dadurch gekennzeichnet, dass** jede Empfangsvorrichtung (9) innerhalb des im hinteren Bereich eines jeden Transportwagens (2) gelegenen Stapeltotraumes (13) vorgesehen und die zum Übertragen von Energie bestimmte Anordnung (19) neben den abgestellten Transportwagen (2) angeordnet ist.

2. Einrichtung nach Anspruch 1, **dadurch gekennzeichnet, dass** jede Empfangsvorrichtung (9) in einem der beiden hinteren seitlichen Bereiche der Transportwagen (2) angeordnet ist.

3. Einrichtung nach Anspruch 1 oder 2, **dadurch gekennzeichnet, dass** an der Anordnung (19) in regelmäßigen Abständen Erregerspulen (19') angeordnet sind, die zum Aufbauen von Magnetfeldern bestimmt sind.

4. Einrichtung nach einem der Ansprüche 1 bis 3, **dadurch gekennzeichnet, dass** die Erregerspulen (19') an einer Schiene (20) angeordnet sind.

5. Einrichtung nach einem der Ansprüche 1 bis 4, **dadurch gekennzeichnet, dass** die in einer Reihe (22) abgestellten Transportwagen (2) durch Pfandschlösser (23) verbunden sind.

## Claims

1. A system (1) consisting of at least two transport trolleys (2) and a collecting station (15) intended for receiving the transport trolleys (2), wherein the transport trolleys (2) comprise a manually operable manoeuvring device and are shaped such that, together with identical transport trolleys (2), they can be pushed into one another in a space-saving manner, and wherein, furthermore, the collecting station (15) has guides (18) by means of which the transport trolleys (2) may be parked in the collecting station so as to be lined up in at least one line (22) and are removable again from the line (22), and wherein the collecting station has at least one arrangement (19), extending longitudinally and intended for transmitting energy, which arrangement extends parallel to the guides (18), and a receiving device (9) for picking up the energy to be transmitted is arranged on the side of each transport trolley (2), **characterised in that** each receiving device (9) is provided within the stacking dead space (13) located in the rear region of each transport trolley (2), and the arrangement (19) intended for transmitting energy is arranged adjacent the parked transport trolleys (2).

2. A system according to Claim 1, **characterised in that** each receiving device (9) is arranged in one of the two rear side regions of the transport trolleys (2).

3. A system according to Claim 1 or 2, **characterised in that** exciting coils (19') are arranged on the arrangement (19) at regular intervals, which coils are intended for creating magnetic fields.

4. A system according to one of Claims 1 to 3, **characterised in that** the exciting coils (19') are arranged on a rail (20).

5. A system according to one of Claims 1 to 4, **characterised in that** the transport trolleys (2) parked in a line (22) are connected by deposit locks (23).

## Revendications

1. Dispositif (1) composé d'au moins deux chariots de transport (2) et d'une station de stockage (15) destiné à recevoir les chariots de transport (2), sachant que les chariots de transport (2) présentent un dispositif de rangement actionnable manuellement et sont conçus de telle sorte qu'ils s'encastrent dans des chariots de transport identiques (2) afin de gagner de la place, sachant en outre que la station de stockage (15) présente des glissières (18) qui permettent de ranger les chariots de transport (2) dans la station de stockage sur au moins une file (22) et de les retirer à nouveau de ladite file (22), et sachant que la station de stockage présente au moins un dispositif (19) s'étendant longitudinalement et destiné à transmettre de l'énergie, qui s'étend parallèlement aux glissières (18), et que sur le côté de chaque chariot de transport (2) est placé un dispositif de réception (9) destiné à recevoir l'énergie à transmettre, **caractérisé en ce que** chaque dispositif de réception (9) est prévu à l'intérieur de l'espace perdu (13) créé par l'encastrement des chariots, qui se situe dans la partie arrière de chaque chariot de transport (2), et **en ce que** le dispositif (19) destiné à transmettre de l'énergie est situé à côté des chariots de transport (2) rangés.

2. Dispositif selon la revendication 1, **caractérisé en ce que** chaque dispositif de réception (9) est disposé dans l'une des deux zones arrière latérales des chariots de transport (2).

3. Dispositif selon la revendication 1 ou 2, **caractérisé en ce que** des bobines excitatrices (19'), qui servent à créer des champs magnétiques, sont disposées à intervalles réguliers sur le dispositif (19).

4. Dispositif selon l'une des revendications 1 à 3, **caractérisé en ce que** les bobines excitatrices (19') sont placées sur un rail (20).

5. Dispositif selon l'une des revendications 1 à 4, **caractérisé en ce que** les chariots de transport (2) rangés sur une file (22) sont reliés entre eux par des consigneurs (23).
